# EUROPÄISCHE PATENTANMELDUNG

(11) **EP 1 990 651 A1**
(43) Veröffentlichungstag der Anmeldung: **12.11.2008**
(21) Anmeldenummer: 08008484.1
(22) Anmeldetag: 06.05.2008
(51) Int. Cl.: G01S 7/04, G01S 13/87, G01S 13/93

(54) **Radarvorrichtung für ein bewegbares Schiff**

(30) Priorität: 08.05.2007 DE 202007006913 U
(71) Anmelder: IN - Innovative Navigation GmbH, 70806 Kornwestheim (DE)
(72) Erfinder: Zimmermann, Reinhard, 71672 Erdmannhausen (DE); Gern, Thomas, 71686 Remseck (DE); Sandler, Martin, 73732 Esslingen (DE)
(74) Vertreter: Raible, Tobias

(57) **Zusammenfassung**

Eine Radarvorrichtung (23) für ein bewegbares Schiff (10) mit mindestens einem ersten und einem zweiten, auf dem Schiff angeordneten Radargerät (12, 14) hat eine Bilderzeugungseinheit mit mindestens einem Interface zur Zuführung von Radarsignalen von dem mindestens einen ersten und zweiten Radargerät (12, 14), eine Bedieneinheit (27), und ein Sichtgerät (25), wobei die Radarvorrichtung (23) einen Betriebsmodus aufweist, bei welchem auf dem Sichtgerät (25) ein Radarbild dargestellt ist, auf dem sowohl aus dem Radarsignal des ersten Radargeräts (12) abgeleitete erste Daten als auch aus dem Radarsignal des zweiten Radargeräts (14) abgeleitete zweite Daten gemeinsam dargestellt sind. Das Abbild des Schiffs ist auf dem Sichtgerät auf einer vorgegebenen Position mit einer vorgegebenen Orientierung angeordnet.

## Beschreibung

Die Erfindung betrifft eine Radarvorrichtung für ein bewegbares Schiff, insbesondere für ein Binnenschiff.

Es ist eine Aufgabe der Erfindung, eine neue Radarvorrichtung bereit zu stellen.

Nach der Erfindung wird diese Aufgabe gelöst durch den Gegenstand des Anspruchs 1. Die Möglichkeit, in einem Radarbild die Daten von mehreren Radargeräten darzustellen, ermöglicht dem Schiffsführer, das Radarbild schneller und sicherer zu verarbeiten.

Weitere Einzelheiten und vorteilhafte Weiterbildungen der Erfindung ergeben sich aus den im folgenden beschriebenen und in den Zeichnungen dargestellten, in keiner Weise als Einschränkung der Erfindung zu verstehenden Ausführungsbeispielen, sowie aus den übrigen Unteransprüchen. Es zeigt:
- Fig. 1: eine schematische Darstellung eines Binnenschiffs,
- Fig. 2: ein Radarbild im "Vorderes Radar"-Betriebsmodus,
- Fig. 3: ein Radarbild im "Hinteres Radar"-Betriebsmodus,
- Fig. 4: eine schematische Darstellung der erfindungsgemäßen Radarvorrichtung
- Fig. 5: ein Radarbild im "Split"-Betriebsmodus,
- Fig. 6: ein Radarbild im "Überlagerungs"-Betriebsmodus,
- Fig. 7: eine Detailansicht aus Fig. 6,
- Fig. 8: ein Flussdiagramm für die erfindungsgemäße Radarvorrichtung,
- Fig. 9: ein farbiges Radarbild im "Vorderes Radar"-Betriebsmodus entspr. Fig. 2,
- Fig. 10: ein farbiges Radarbild im "Hinteres Radar"-Betriebsmodus entspr. Fig. 3,
- Fig. 11: ein farbiges Radarbild im "Split"-Betriebsmodus entspr. Fig. 5, und
- Fig. 12: ein farbiges Radarbild im "Überlagerungs"-Betriebsmodus entspr. Fig. 6.

Gleiche oder gleich wirkende Teile werden in den verschiedenen Figuren entweder nur in einem Teil der Figuren gekennzeichnet oder mit denselben Bezugszeichen bezeichnet und gewöhnlich nur einmal beschrieben.

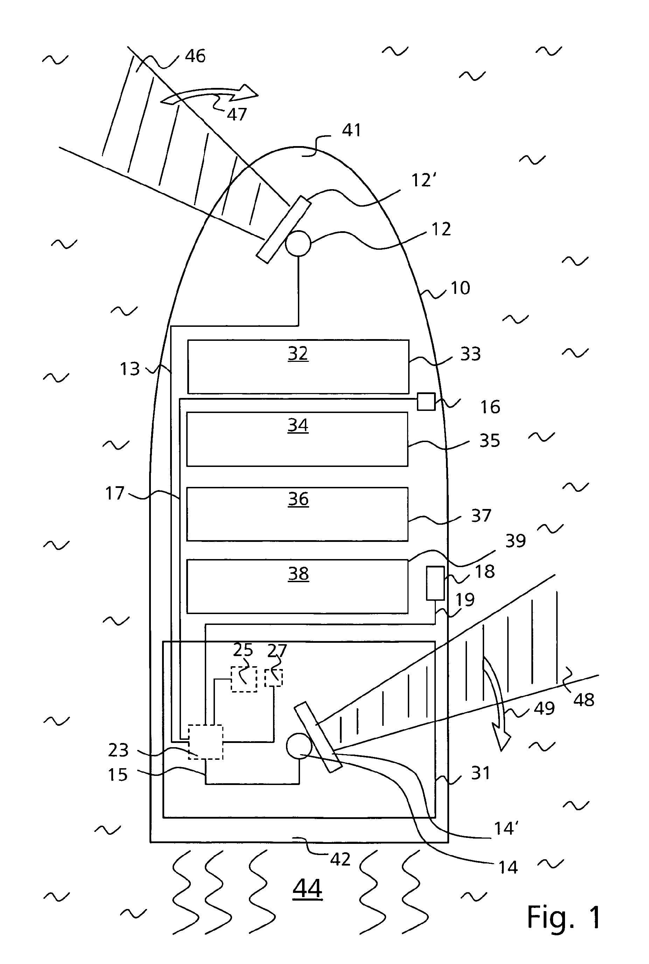

**Fig. 1** zeigt ein Binnenschiff 10 mit einem Bug 41, einem Heck 42, einem ersten, am Bug 41 angeordneten Radargerät 12, einem zweiten, am Heck 42 auf dem Führerstand 31 angeordneten Radargerät 14, einem ersten GPS-Gerät 16, einem zweiten GPS-Gerät 18, einer Radarvorrichtung 23 mit einem Sichtgerät 25 und einer Bedieneinheit 27. Die Radarvorrichtung 23 ist über eine Leitung 13 mit dem Radargerät 12, über eine Leitung 15 mit dem Radargerät 14, über eine Leitung 17 mit dem GPS-Gerät 16 und über eine Leitung 19 mit dem GPS-Gerät 18 verbunden. Das Schiff 10 weist Stauräume 32, 34, 36 und 38 mit dazugehörigen Luken 33, 35, 37 und 39 auf. Hinter dem Schiff 10 bilden sich bei der Fahrt Wellen 44. Die Antenne 12' des Radargeräts 12 sendet gerichtete Radarstrahlen aus, was mit dem Bereich 46 angedeutet ist, und empfängt anschließend die reflektierten Radarstrahlen. Dabei wird die Radarantenne z.B. fortlaufend im Kreis gedreht, was mit dem Pfeil 47 angedeutet ist. In gleicher Weise sendet die Radarantenne 14' des Radargeräts 14 gerichtete Radarstrahlen auf (Gebiet 48), und die Radarantenne 14' wird ebenfalls im Kreis gedreht, was mit dem Pfeil 49 angedeutet ist. Bei großen Schiffen kann der Abstand zwischen der vorderen Radarantenne 12' und der hinteren Radarantenne 14' z.B. 200 m betragen.

Das Radargerät 12 am Bug 41 kann kaum Informationen für den Bereich hinter dem Schiff 10 erzeugen, da die Radarstrahlen im Bereich des von dem Radargerät 12 aus gesehenen hinteren Führerstand 31 im Wesentlichen vollständig reflektiert werden. Hierdurch kann es vorkommen, dass ein nachfolgendes Schiff auf dem Radarbild des Radargeräts 12 unsichtbar bleibt, und dies kann zu Gefahrensituationen führen.

Das Radargerät 14 am Heck 42 kann üblicherweise auch Informationen aus dem Bereich vor dem Schiff 10 ermitteln. Störend sind jedoch die zum Teil sehr starken Echos und Geister-Echos, die bei offenen Luken 33, 35, 37 und 39 mit leeren Stauräumen 32, 34, 36 und 38 durch Reflexionen des Radarsignals innerhalb der Stauräume entstehen können. Bei mit Containern beladenen Schiffen besteht zudem das Problem, dass, selbst wenn die Radarantenne 14' oberhalb der Container angeordnet ist, der Bereich vor dem Schiff 10 insbesondere bezüglich kleinerer Schiffe bzw. Objekte durch die Container abgeschattet ist.

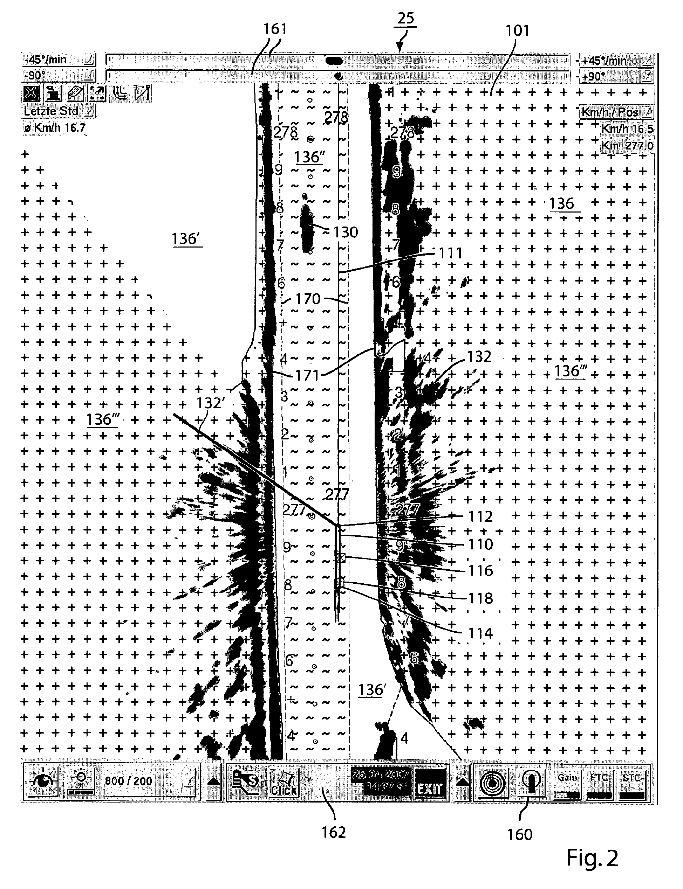

**Fig. 2** zeigt die Anzeigevorrichtung 25 mit einem oberen Anzeige- und Bedienbereich 161 (z.B. Wendegeschwindigkeit, Ruderstellung, Geschwindigkeit, Flusskilometeranzeige), einem unteren Anzeige- und Bedienbereich 162 (z.B. Skalierung (engl.: range) und Abstand der ggf. eingezeichneten Radarringe, Farbdarstellungsmodus für Tag-/Nachtfahrt, Datum, Uhrzeit, Radar-Betriebsmodus 160) und einem realen Radarbild 101, in dem die aus dem Radargerät 12 abgeleiteten Radardaten bzw. Radarechos 132 dargestellt sind. Der Radar-Betriebsmodus wird auch als "Vorderes Radar-Betriebsmodus" (front mode) bezeichnet und ist auf der Anzeigevorrichtung 25 an der Stelle 160 angezeigt. Das Radarbild 101 ist in der sog. head up-Orientierung dargestellt, bei der das Abbild 110 des Schiffs 10 auf dem Radarbild 101 auf einer vorgegebenen Position mit einer vorgegebenen Orientierung angeordnet ist. Die Orientierung ist so gewählt, dass die Vorauslinie 111 des Abbilds 110 senkrecht zum oberen Bildrand hinzeigt. In dem Radarbild 101 sind das Abbild 110 des Schiffs 10, ein Abbild 112 des Radargeräts 12, ein Abbild 114 des Radargeräts 14, ein Abbild 116 des GPS-Geräts 16 und ein Abbild 118 des GPS-Geräts 18 dargestellt. Die Darstellung kann aber auch nur teilweise oder überhaupt nicht erfolgen.

In dem Radarbild 101 sind neben den Radardaten 132 des Radargeräts 12 auch Kartendaten 136 dargestellt, wobei in der Druckdarstellung das Wasser 136' mit den Begrenzungslinien 171 in der Farbe Weiß, die Fahrstraße 136" mit den Begrenzungslinien 170 mit einem Muster mit einem Tilde-Zeichen und das Land 136"' mit einem Muster mit einem Pluszeichen dargestellt sind. In der eigentlichen Darstellung auf einem Radarschirm werden das Wasser 136' z.B. in der Farbe Blau, die Fahrstraße 136" in der Farbe Weiß und das Land 136"' in der Farbe Ocker oder in einer vom Benutzer konfigurierbaren Darstellung dargestellt. Zusätzlich sind die Angaben zu den aktuellen Flusskilometern angegeben.

Es ist zu sehen, dass insbesondere im Bereich des Ufers Radarechos 132 entstehen, und ein Abbild 130 eines entgegenkommenden Schiffs ist ebenfalls dargestellt. Bei den Radarechos 132 ist zu sehen, dass diese strahlenförmig um das Abbild 112 des Radargeräts 12 angeordnet sind. Im Bereich des Abbilds 110 des Schiffs 10 sind starke Radarechos 132 zu sehen, und im Bereich hinter dem Abbild 110 sind ebenfalls Radarechos 132 sichtbar, wobei diese vermutlich durch Mehrfachreflexionen im Bereich des Schiffs 10 entstehen. Zur Verdeutlichung der Position des Radargeräts ist eine Linie 132' zwischen dem Abbild 112 des Radargeräts 12 und einem Radarecho eingezeichnet.

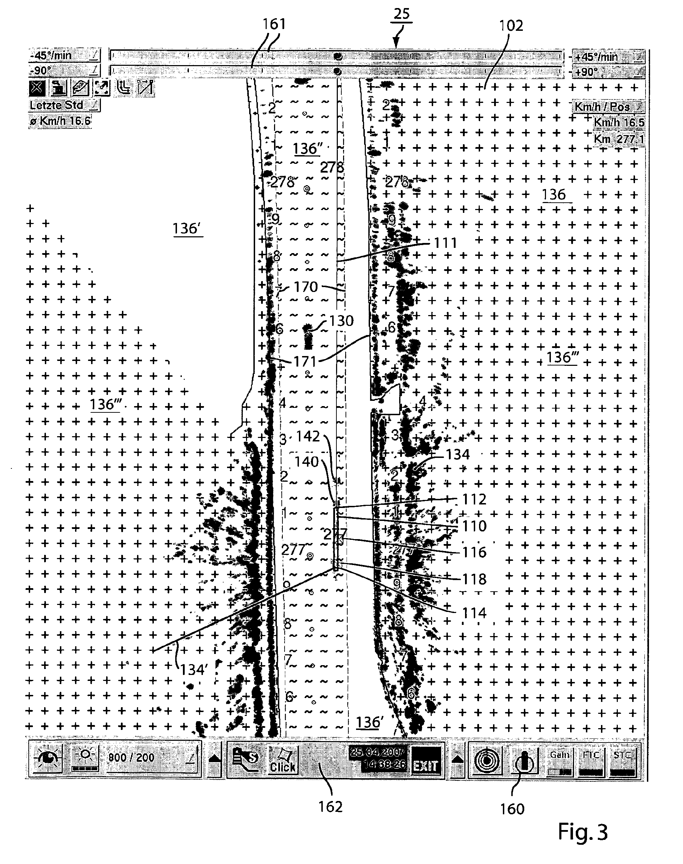

**Fig. 3** zeigt die Anzeigevorrichtung 25 mit einem Radarbild 102 in head up-Orientierung und in einem Radar-Betriebsmodus "Hinterer Radar-Betriebsmodus" (back mode), in welchem die Radardaten des hinteren Radargeräts 14 dargestellt sind (angezeigt an der Stelle 160), und welches zu einem Zeitpunkt aufgenommen wurde, welcher 35 Sekunden nach dem Zeitpunkt von Fig. 2 liegt. Es ist zu sehen, dass die Radardaten 134 strahlenförmig von dem Abbild 114 des Radargeräts 14 ausgehen, und dies wird durch die Linie 134' verdeutlicht, welche vom Abbild 114 des Radargeräts 14 ausgehend zu einem Radarecho 134 verläuft. Das Abbild 130 des entgegenkommenden Schiffs ist bereits näher gekommen, es wird jedoch durch das Radargerät 14 am Heck 42 des Schiffs 10 weniger stark detektiert, als dies im Radarbild 101 aus Fig. 2 der Fall war. Im vorderen Bereich des Abbilds 110 des Schiffs 10 ist ein starkes Radarecho 140 dargestellt, und ca. eine Drittel Schiffslänge davor ein weiteres Radarecho 142. An der Stelle des Radarechos 142 befindet sich kein Schiff, sondern dieses Radarecho entsteht durch Mehrfachreflexionen am Schiff 10. Man spricht von einem Geist-Echo.

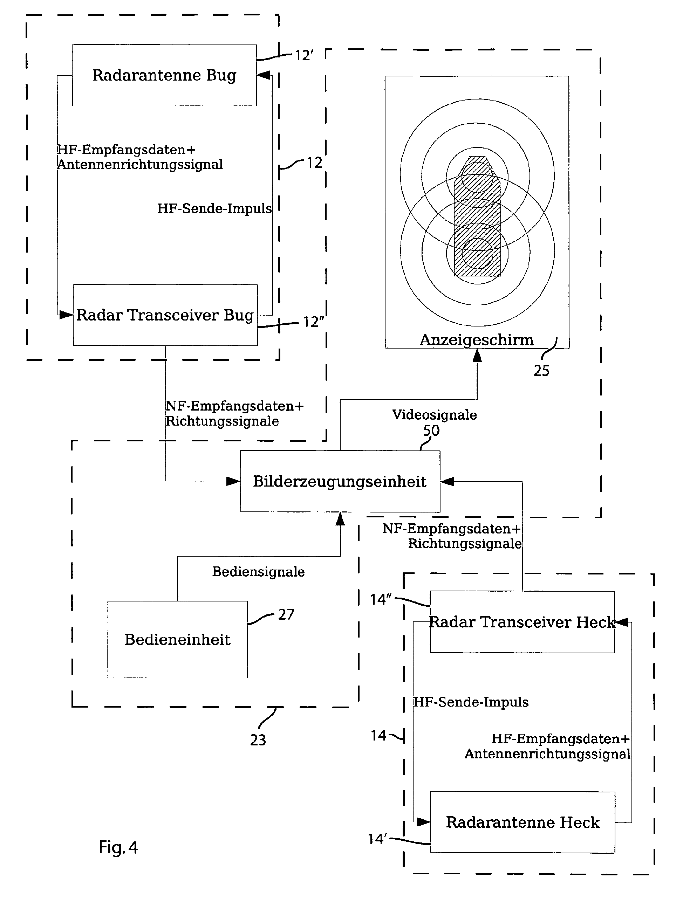

**Fig. 4** zeigt ein Blockschaltbild der Radarvorrichtung 23 und der beiden Radargeräte 12 und 14.

Das am Bug 41 angeordnete Radargerät 12 (d.h., zumindest die Radarantenne 12' ist am Bug angeordnet) hat einen Radar-Transceiver 12" und die Radarantenne 12'. Der Radar-Transceiver 12" sendet HF-Sende-Impulse (HF = Hochfrequenz) an die Radarantenne 12', welche daraufhin Radarstrahlen aussendet und die reflektierten Radarstrahlen detektiert. Die Radarantenne 12' setzt die empfangenen Radarstrahlen in HF-Empfangsdaten um, und diese werden zusammen mit einem Antennenrichtungssignal über die momentane Ausrichtung der Radarantenne 12' an den Radar-Transceiver 12" übertragen. In dem Radar-Transceiver 12" werden die HF-Empfangsdaten in NF-Empfangsdaten (NF = Niederfrequenz) umgewandelt und zusammen mit den Antennenrichtungssignalen an die Radarvorrichtung 23 übermittelt.

In gleicher Weise funktioniert das Radargerät 14, welches ebenfalls einen Radar-Transceiver 14" und die Radarantenne 14' aufweist. Die entsprechenden NF-Empfangsdaten und Antennenrichtungssignale werden ebenfalls an die Radarvorrichtung 23 übermittelt. Die Radarvorrichtung 23 hat eine Bilderzeugungseinheit 50, die mit der Bedieneinheit 27 und dem Sichtgerät 25 (z. B.

Monitor, Flachbildschirm) zur Übermittlung von Videosignalen verbunden ist. Die Bilderzeugungseinheit 50 ist z. B. als Computer ausgebildet, welcher mindestens ein Interface hat, über das die Daten der Radargeräte 12 und 14 zugeführt werden.

Die Bilderzeugungseinheit 50 verarbeitet die von den Radargeräten 12 und 14 empfangenen Daten bzw. Signale und erzeugt daraus ein Radarbild, welches auf dem Sichtgerät (Anzeigeschirm) 25 dargestellt wird. Über die Bedieneinheit 27 kann bspw. die Skalierung des Radarbilds (range) eingestellt werden, oder es können verschiedene Betriebsmodi bzgl. des Radarbilds eingestellt werden.

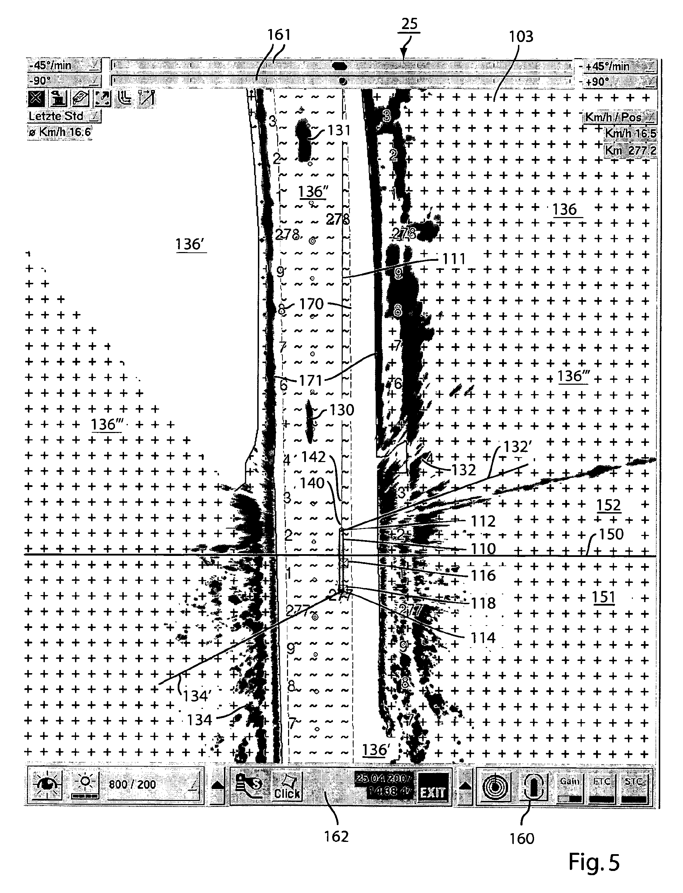

**Fig. 5** zeigt ein Radarbild 103 im sog. Split-Modus (split mode) mit head up-Orientierung.

In das Radarbild 103 ist zur Verdeutlichung eine senkrecht zur Vorausrichtung 111 verlaufende Linie 150 dargestellt, welche in etwa durch die Mitte der Abbildung 110 des Schiffs 10 hindurch läuft. In diesen Betriebsmodus werden unterhalb der Linie 150 und damit in dem vom Abbild 110 des Schiffs 10 aus gesehenen hinteren Bereich nur die Daten des Radargeräts 14 dargestellt, und im Bereich 152 oberhalb der Linie 150 und damit im vom Abbild 110 des Schiffs 10 aus gesehenen vorderen Bereichs werden nur die Daten des Radargeräts 12 am Bug 41 des Schiffs 10 dargestellt. Dies wird deutlich durch die vom Abbild 114 des Radargeräts 14 zu einem Radarecho verlaufenden Linie 134' unterhalb der Linie 150 sowie durch die vom Abbild 112 des Radargeräts 12 ausgehende, durch die Radarechos verlaufende Linie 132' in dem Bereich oberhalb der Linie 150.

Das Radarbild 103 wurde 21 Sekunden nach dem Radarbild 102 aus Fig. 3 aufgenommen, und es ist zu sehen, dass das Abbild 130 eines Schiffs näher gekommen ist, und ein weiteres Abbild 131 eines anderen entgegenkommenden Schiffs im Radarbild vorhanden ist.

Es ist deutlich zu sehen, dass insbesondere im Bereich um das Abbild 110 des Schiffs 10 herum deutlich weniger unerwünschte Echos zu sehen sind. Des Weiteren besteht im Bereich vor dem Abbild des Schiffs 110 und im Bereich dahinter eine größere Sicherheit, dass vorhandene Objekte detektiert werden.

Der Schiffsführer kann sich somit auf ein einziges Radarbild konzentrieren und hat mehr Zeit für andere wichtige oder zur Erholung, was die Sicherheit erhöht. Außerdem kann auf Grund der Darstellung von zwei Radarsignalen in einem Radarbild ggf. ein Monitor entfallen, sofern nicht weitere Monitore aus Redundanzgründen notwendig sind, und damit wird auch Platz gespart.

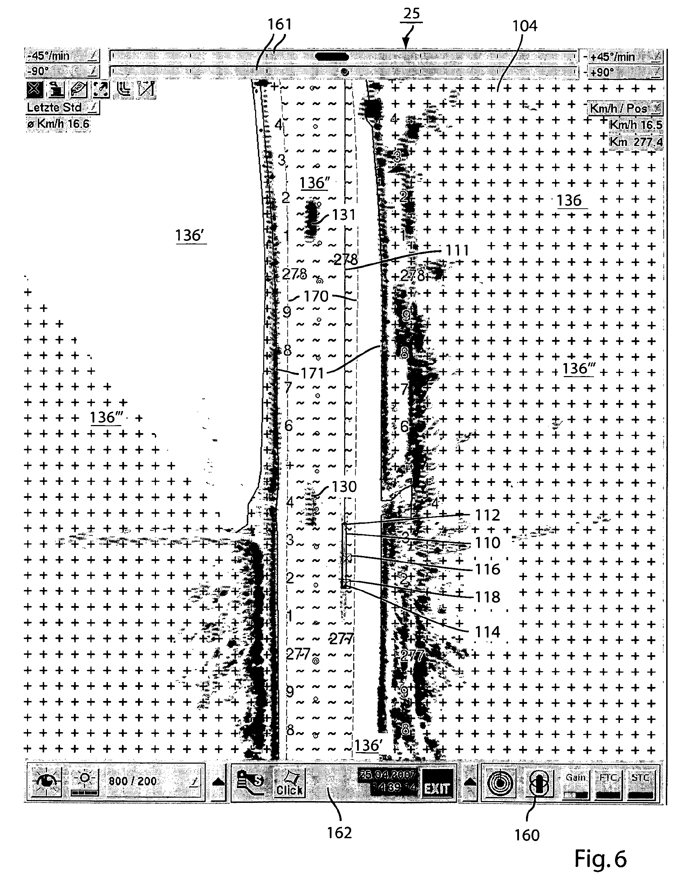

**Fig. 6** zeigt ein Radarbild 104 im sog. Overlay-Betriebsmodus (Überlagerungs-Betriebsmodus), ebenfalls in head up-Orientierung. In dem Radarbild 104 sind vor und hinter dem Abbild 110 des Schiffs 10 sowohl die Radardaten des Radargeräts 12 als auch die Radardaten des Radargeräts 14 dargestellt. Bevorzugt wird ein sog. Dithering-Verfahren verwendet, bei dem das Radarbild entsprechend einem Schachbrett aufgeteilt wird, wobei z. B. die schwarzen Felder jeweils für die Radarechos des Radargeräts 12 und die weißen Felder jeweils für die Radarechos des Radargeräts 14 verwendet werden. Falls z. B. im Landgebiet 136''' der Kartenhintergrund 136 ockerfarben dargestellt wird, erscheint ein Radarecho, das nur von einem Radargerät in dem entsprechenden Gebiet vorhanden ist, als hellgrüne Fläche, wobei bei genauem Hinsehen ein schachbrettartiges Muster mit grünen und ockerfarbenen Bildpunkten zu sehen ist. In Gebieten, in denen sowohl ein Radarecho von dem Radargerät 12 als auch von dem Radargerät 14 vorhanden ist, erscheint das Radarecho als gesamtgrüne Fläche. Hierdurch kann der Schiffsführer gut unterscheiden, ob ein Radarecho nur von einem Radargerät stammt, oder aber von beiden Radargeräten 12 und 14. Da Geister-Echos üblicherweise abhängig von der Lage der Radar-Antenne sind, kann der Schiffsführer in dieser Darstellung Geister-Echos gut erkennen.

Das Radarbild 104 wurde 27 Sekunden nach dem Radarbild 103 aus Fig. 5 aufgenommen, und das Abbild 130 des entgegenkommenden Schiffs befindet sich fast auf gleicher Höhe wie das Abbild 110 des Schiffs 10. Das Abbild 131 des anderen entgegenkommenden Schiffs ist ebenfalls näher gerückt.

Das Radarbild 104 ist aufgrund der umfangreichen dargestellten Information auf Dauer vom Schiffsführer schwieriger zu verarbeiten als das Radarbild 103 aus Fig. 5. Da die Radarvorrichtung 23 ein schnelles Umschalten zwischen den einzelnen Betriebsmodi ermöglicht, kann der Schiffsführer z. B. kurzzeitig in den Overlay-Betriebsmodus umschalten, wenn er prüfen will, ob ein Radarecho ein Geisterecho ist oder nicht. Nach der Klärung kann er dann z. B. wieder in den Split-Betriebsmodus umschalten. Auf dem Sichtgerät ist unterhalb des Radarbilds 101 bis 104 jeweils ein Piktogramm 160 angeordnet, welches angibt, in welchem Betriebsmodus die Radarvorrichtung 23 im Moment arbeitet. Über die Bedieneinheit 27, z. B. über eine Mouse, kann der Schiffsführer durch Anklicken der Fläche 160 den Betriebsmodus umstellen.

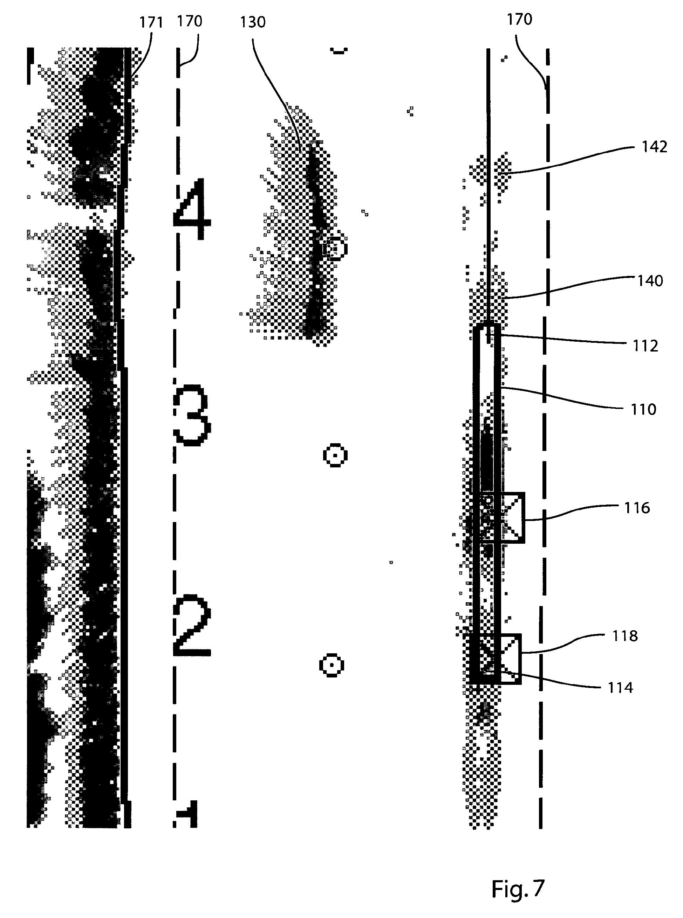

**Fig. 7** zeigt eine vergrößerte Darstellung eines Bereichs der Fig. 6 mit dem Abbild 110 des Schiffs 10 und dem Abbild 130 des entgegenkommenden Schiffs. Die schachbrettartige Positionierung der Radardaten ist gut zu erkennen, da in den Bereichen, in denen nur ein Radarecho von einem der Radargeräte vorliegt, ein schachbrettartiges Muster zu sehen ist, während in den Bereichen, in denen von beiden Radargeräten ein Radarecho detektiert wurde, eine insgesamt dunkle Fläche erkennbar ist. Der Schiffsführer kann so z. B. erkennen, dass es sich bei dem Radarecho 142 vermutlich um ein Geist-Echo handelt, da dieses nur von einem Radargerät erfasst wurde. Das Abbild 130 des entgegenkommenden Schiffs kann dagegen als richtiges Radarecho erkannt werden, wobei die Breite des Schiffs durch den dunklen, nicht schachbrettgemusterten Bereich erkennbar ist. Im Bereich des Ufers liegt von beiden Radargeräten 12, 14 jeweils ein Radarecho vor. Es ist auch zu sehen, dass die einzelnen Punkte eine Farbe haben, deren Intensität abhängig von der Intensität des Radarechos ist.

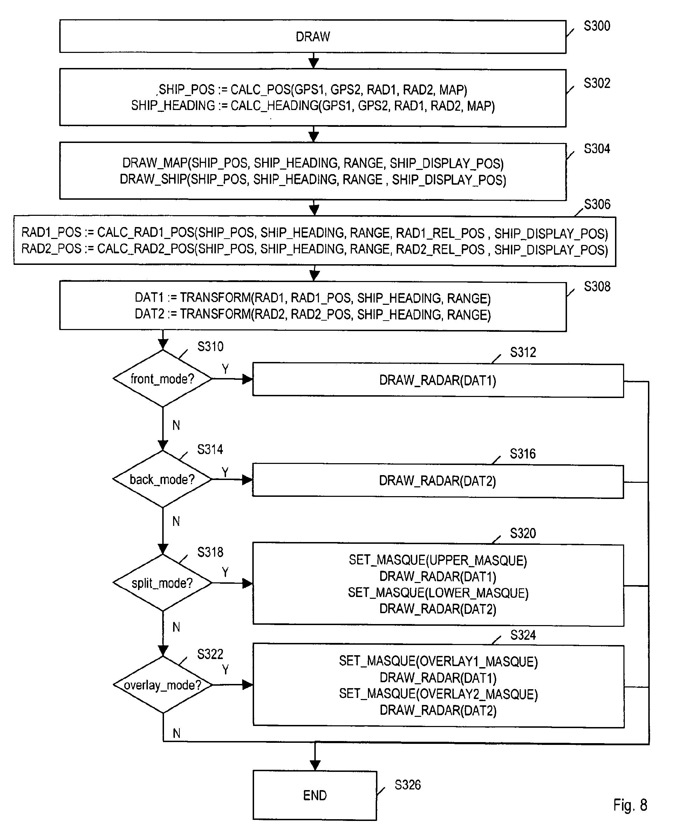

**Fig. 8** zeigt ein Flussdiagramm für die in dem Programm in der Radarvorrichtung 23 (Computer) ablaufenden Routine "DRAW" S300, die z. B. in regelmäßigen Abständen oder aber dann, wenn neue Daten vorliegen, aufgerufen wird. Im Schritt S302 wird die Position des Schiffs SHIP_POS durch Aufruf der Routine CALC_POS anhand der Daten GPS1 des GPS-Geräts 16, GPS2 des GPS-Geräts 18, RAD1 des Radargeräts 12, RAD2 des Radargeräts 14 und der Kartendaten MAP berechnet, bevorzugt in Längen- und Breitengraden. In gleicher Weise wird die Vorausrichtung SHIP_HEADING des Schiffs 10 durch Aufruf der Funktion CALC_HEADING in Abhängigkeit von den gleichen Daten berechnet. Anschließend wird im Schritt S304 die Karte 136 durch Aufruf der Funktion DRAW_MAP in Abhängigkeit von den Daten SHIP_POS, SHIP_HEADING, der gewünschten Auflösung RANGE und der gewünschten Position des Abbilds des Schiffs auf dem Bildschirm SHIP_DISPLAY_POS (so genannte Dezentrierung) gezeichnet. Danach wird das Abbild 110 des Schiffs 10 mit den Abbildern 112, 114 der Radargeräte 12 und 14 und den Abbildern 116, 118 der GPS-Geräte 16, 18 durch Aufruf der Funktion DRAW_SHIP in Abhängigkeit von den gleichen Parametern gezeichnet.

Im Schritt S306 wird die Position des ersten Radars RAD1_POS durch Aufruf der Funktion CALC_RAD1_POS in Abhängigkeit von den Parametern SHIP_POS, SHIP_HEADING, RANGE, RAD1_REL_POS und SHIP_DISPLAY_POS berechnet, wobei der Parameter RAD1_REL_POS die relative Position des Radargeräts 12 zum Schiffsbezugspunkt angibt. In gleicher Weise wird die Position des Radars 18 RAD2_POS durch Aufruf der Funktion CALC_RAD2_POS berechnet.

Im Schritt S308 werden die darzustellenden Radardaten DAT1 des Radars 12 durch Aufruf der Funktion TRANSFORM in Abhängigkeit von den Parametern RAD1, RAD1_POS, SHIP_HEADING und RANGE berechnet. Die Radardaten RAD1 werden vom Radargerät 12 üblicherweise in Polarkoordinaten übermittelt, und es muss eine Koordinatentransformation auf den kartesischen Bildschirmbereich und abhängig von der Position des Abbilds 112 des Radars 12 auf dem Bild durchgeführt werden. Dieser Vorgang wird auch als Scan-Konvertierung bezeichnet. In gleicher Weise werden die darzustellenden Radardaten DAT2 berechnet. Durch die Berücksichtigung der Position der Radargeräte 12 bzw. 14 auf dem Schiff erfolgt eine Dezentralisierung der Radardaten, d.h., die Radardaten der vorderen und hinteren Radarantennen 12, 14 werden nicht so eingezeichnet, als ob sie von einer in der Mitte des Schiffs angeordneten gemeinsamen Position stammen.

Anschließend werden in den Schritten S31 0 bis S324 die Radardaten entsprechend dem ausgewählten Betriebsmodus dargestellt.

Sofern der Betriebsmodus "front_mode" eingestellt ist, erfolgt ein Sprung vom Schritt S310 zum Schritt S312, und es werden die Radardaten DAT1 durch Aufruf der Funktion DRAW_RADAR auf dem gesamten Radarbild dargestellt. Im Betriebsmodus "back_mode" werden in gleicher Weise im Schritt S316 die Radardaten DAT2 dargestellt. Im Betriebsmodus "split_mode" wird im Schritt S320 eine Maske durch Aufruf der Funktion SET_MASQUE und dem Parameter UPPER_MASQUE gesetzt, so dass alle nachfolgenden Zeichenoperationen nur im bezüglich des Abbilds 110 des Schiffs 10 oberen Bereich dargestellt werden. Anschließend werden die Radardaten DAT1 durch Aufruf der Funktion DRAW_RADAR im oberen Bereich gezeichnet, wobei durch die Maske ggf. im unteren Bereich liegende Radardaten verworfen bzw. nicht dargestellt werden. Nun wird durch erneuten Aufruf der Funktion SET_MASQUE mit dem Parameter LOWER_MASQUE eine Maske für den unteren Bereich gesetzt, so dass all Zeichenoperationen nur noch in dem vom Abbild des Schiffs 110 des Schiffs 10 aus gesehenen unteren Bereichs dargestellt werden und der obere Bereich geschützt ist. Die Radardaten DAT2 werden daraufhin gezeichnet.

Im Betriebsmodus "overlay_mode" wird eine schachbrettförmige Maske (vgl. Fig. 7) durch Aufruf der Funktion SET_MASQUE mit dem Parameter OVERLAY1_MASQUE gesetzt, und anschließend werden die Radardaten DAT1 gezeichnet. Anschließend wird eine zweite, bevorzugt zur ersten Maske inverse Maske OVERLAY2_MASQUE durch Aufruf der Funktion SET_MASQUE gesetzt, und die Radardaten DAT2 werden in die entsprechenden Pixel gezeichnet.

Nach dem Zeichnen der Radardaten wird die Funktion "DRAW" im Schritt S326 verlassen.

Die Erfindung ist nicht auf ein Darstellungsverfahren gemäß Fig. 8 beschränkt, und es sind vielfältige Abwandlungen möglich. So kann z.B. beim Betriebsmodus "overlay_mode" eine Maske gesetzt werden, bei der jeweils mehrere benachbarte Bildpunkte zu den Radardaten eines Radargeräts 12 bzw. 14 gehören, oder aber es kann statt mit dem Dithering-Verfahren mit Farbüberlagerungen gearbeitet werden.

Naturgemäß sind im Rahmen der Erfindung vielfältige Abwandlungen und Ausgestaltungen möglich.

Die Umschaltung zwischen den einzelnen Betriebsmodi für die Anzeige, d.h. die Zeit, bis zu der die neue Darstellung des Radarbilds zu sehen ist, erfolgt bevorzugt innerhalb von drei Umdrehungen der Radarantennen, weiter bevorzugt innerhalb von anderthalb Umdrehungen der Radarantennen, besonders bevorzugt innerhalb von einer Umdrehung der Radarantennen, und besonders bevorzugt innerhalb einer Viertel Umdrehung der Radarantennen. Dies wird dadurch ermöglicht, dass wie in Fig. 8 dargestellt die Radardaten DAT1 und DAT2 im Schritt S308 unabhängig vom Betriebsmodus berechnet werden. Dadurch kann bei einer Änderung auf einen neuen Betriebsmodus in den Schritten S31 0 ff. sofort bei der Berechnung des nächsten Bilds dieses vollständig im neuen Betriebsmodus angezeigt werden. Es werden z.B. 20 Bilder pro Umdrehung der Radarantennen berechnet, wobei eine Umdrehung der Radarantennen z.B. 2 s dauert.

Als Sichtgerät 25 wir bevorzugt ein Monitor verwendet, besonders bevorzugt ein Monitor im 16:10-Format im Portrait-Modus, bei dem zwischen der oberen und unteren Kante des Radarbilds mehr Platz als zwischen der linken und rechten Kante des Radarbilds ist. Dies hat den Vorteil, dass bei der head up-Orientierung auch bei der Überlagerung der Radardaten sowohl weit nach vorne (oben) als auch ausreichend weit nach hinten (unten) gesehen werden kann.

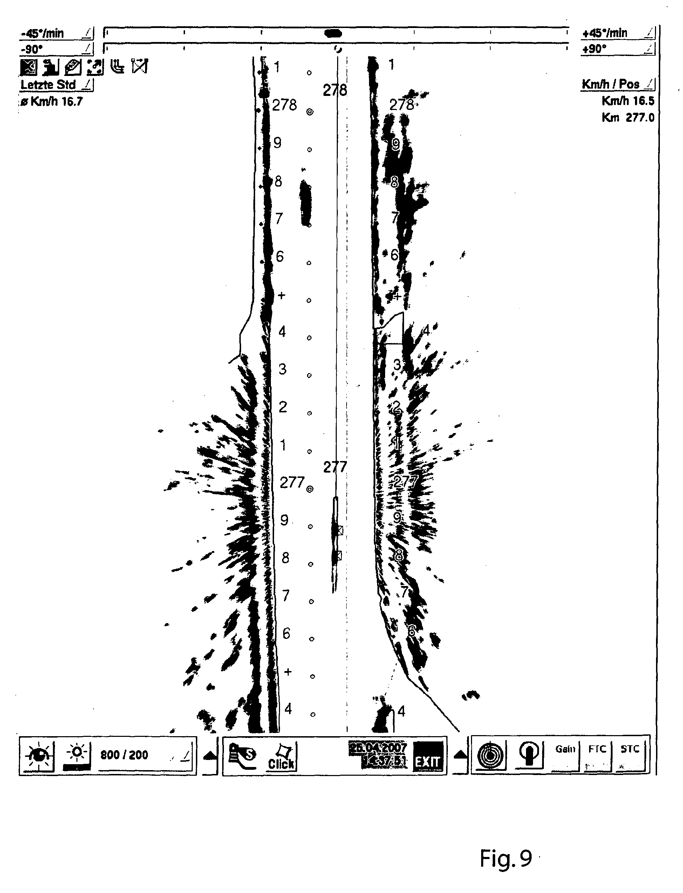

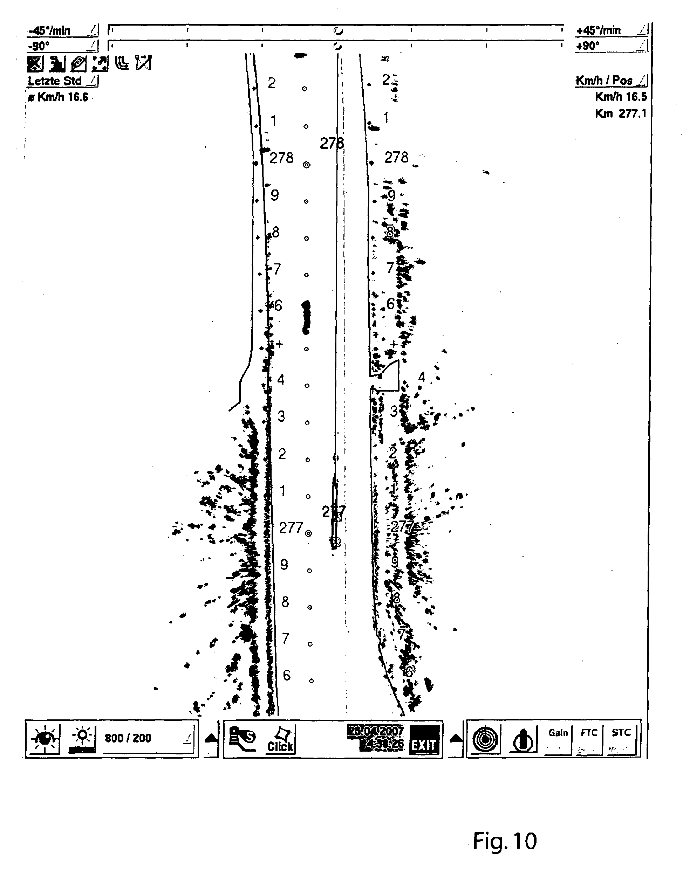

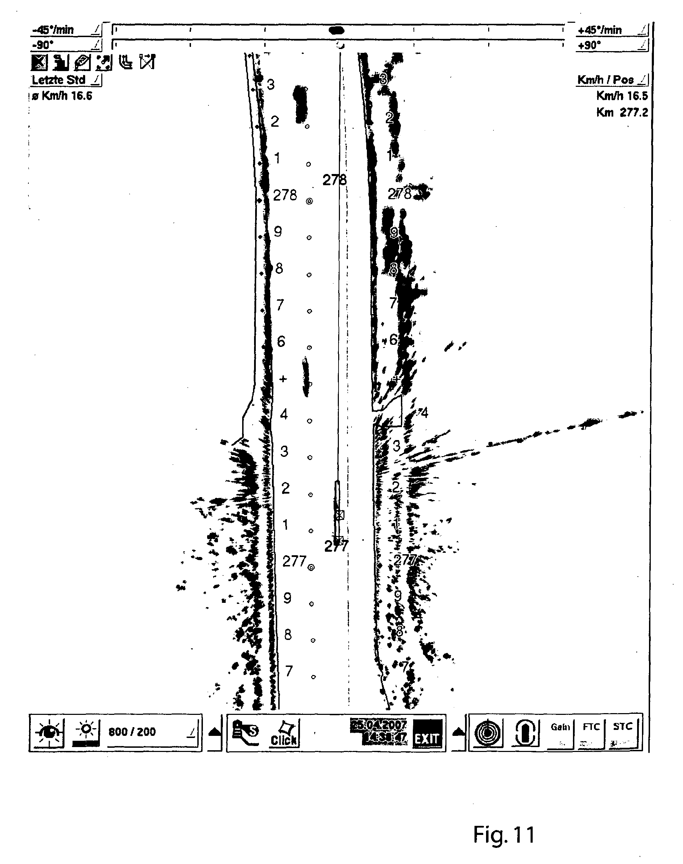

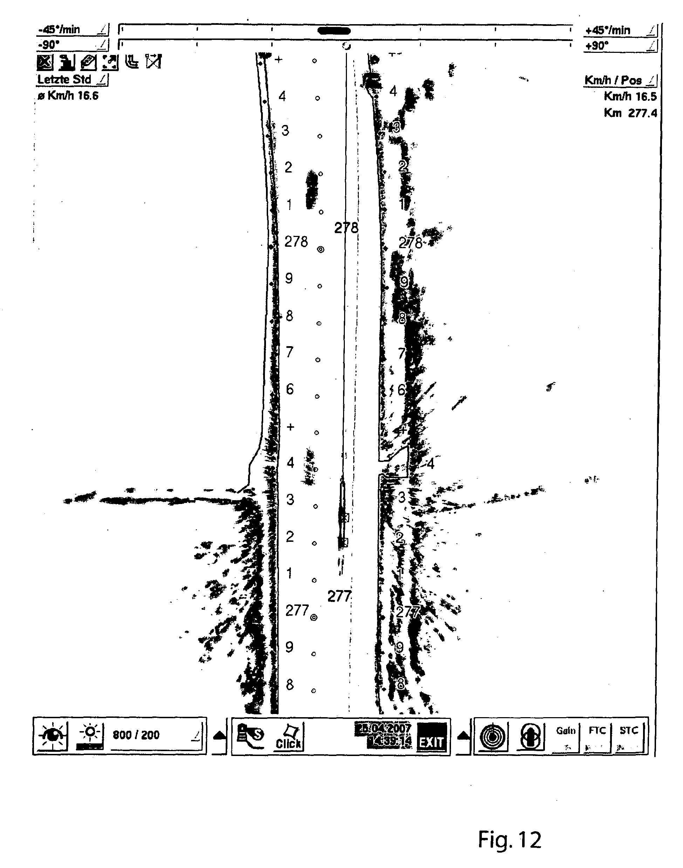

**Fig. 9****,** **Fig. 10****,** **Fig. 11** und **Fig. 12** zeigen farbige Darstellungen der Radarbilder entsprechend den Fig. 2, Fig. 3, Fig. 5 und Fig. 6, aus denen die Radardaten besser ersichtlich sind.

## Patentansprüche

1. Radarvorrichtung (23) für ein bewegbares Schiff (10) mit mindestens einem ersten und einem zweiten, auf dem Schiff angeordneten Radargerät (12, 14), welche Radarvorrichtung (23) aufweist:
Eine Bilderzeugungseinheit (50) mit mindestens einem Interface zur Zuführung von Radarsignalen von dem mindestens einen ersten und zweiten Radargerät (12,14),
eine Bedieneinheit (27), und
ein Sichtgerät (25),
wobei die Radarvorrichtung (23) einen Betriebsmodus aufweist, bei welchem auf dem Sichtgerät (25) ein Radarbild (103, 104) dargestellt ist, auf dem sowohl aus dem Radarsignal des ersten Radargeräts (12) abgeleitete erste Daten als auch aus dem Radarsignal des zweiten Radargeräts (14) abgeleitete zweite Daten gemeinsam dargestellt sind, und
das Abbild (110) des Schiffs auf dem Sichtgerät auf einer vorgegebenen Position mit einer vorgegebenen Orientierung angeordnet ist.

2. Radarvorrichtung nach Anspruch 1 für ein bewegbares Schiff (10) mit mindestens einem ersten und einem zweiten, auf dem Schiff angeordneten Radargerät (12, 14), wobei das erste und das zweite Radargerät an unterschiedlichen Positionen angeordnet sind,
bei welcher Radarvorrichtung (23) bei der Darstellung der ersten und zweiten Daten die Position der zugehörigen Radargeräte auf dem Schiff berücksichtigt ist.

3. Radarvorrichtung nach Anspruch 1 oder 2, bei welcher in dem Radarbild (103, 104) der Darstellungsmaßstab der ersten Daten und der zweiten Daten gleich ist.

4. Radarvorrichtung nach einem der vorhergehenden Ansprüche,
welche einen Speicher zur Speicherung von Kartendaten hat, und
bei welcher die Kartendaten auf dem Radarbild (103, 104) dargestellt werden.

5. Radarvorrichtung nach einem der vorhergehenden Ansprüche für ein bewegbares Schiff mit mindestens einem GPS-Gerät (16, 18) zur Erzeugung von Positionsdaten,
welche die Position des Schiffs (10) über die Positionsdaten errechnet.

6. Radarvorrichtung nach einem der vorhergehenden Ansprüche für ein bewegbares Schiff (10) mit mindestens zwei, an unterschiedlichen Positionen auf dem Schiff angeordneten GPS-Geräten (16, 18) zur Erzeugung von Positionsdaten,
welche Radarvorrichtung (23) dazu ausgebildet ist, die Orientierung des Schiffs aus den Positionsdaten der mindestens zwei GPS-Geräte (16, 18) zu ermitteln.

7. Radarvorrichtung nach einem der vorhergehenden Ansprüche,
welche einen Betriebsmodus aufweist, der im Folgenden Split-Betriebsmodus genannt wird, bei welchem in dem Radarbild (103) in dem Bereich vor dem Abbild (110) des Schiff nur die ersten Daten und in dem Bereich hinter dem Abbild (110) des Schiffs nur die zweiten Daten dargestellt sind.

8. Radarvorrichtung nach Anspruch 7,
bei welcher eine virtuelle Trennlinie (150) senkrecht zur Längsachse (111) des Abbilds (110) des Schiffs verläuft, die das Radarbild (103) in einen vorderen Bereich (152) und einen hinteren Bereich (151) aufteilt, wobei in dem vorderen Bereich nur die ersten Daten und in dem hinteren Bereich nur die zweiten Daten dargestellt sind,
wobei die virtuelle Trennlinie (150) bevorzugt zwischen dem vorderen Ende und dem hinteren Ende des Abbilds (110) des Schiffs angeordnet ist.

9. Radarvorrichtung nach einem der Ansprüche 1 bis 6,
welche einen Betriebsmodus aufweist, der im Folgenden Overlay-Betriebsmodus genannt wird, bei welchem in dem Radarbild (104) zumindest in einem Teilbereich sowohl die ersten Daten als auch die zweiten Daten dargestellt werden.

10. Radarvorrichtung nach einem der vorhergehenden Ansprüche, welche mindestens zwei Betriebsmodi aufweist und welche dazu ausgebildet ist,
eine Umschaltung zwischen den mindestens zwei Betriebsmodi zu ermöglichen,
wobei die Umschaltung bevorzugt innerhalb von maximal drei Umdrehungen der Radarantennen (12', 14') erfolgt,
wobei die Umschaltung weiter bevorzugt innerhalb von maximal anderthalb Umdrehungen der Radarantennen erfolgt,
wobei die Umschaltung weiter bevorzugt innerhalb von maximal einer Umdrehungen der Radarantennen erfolgt,
wobei die Umschaltung weiter bevorzugt innerhalb von maximal einer Viertel Umdrehungen der Radarantennen erfolgt.

11. Radarvorrichtung nach Anspruch 10, welche auch einen Betriebsmodus aufweist, in dem nur die ersten Daten dargestellt werden.

12. Radarvorrichtung nach Anspruch 10 bis 11, welche auch einen Betriebsmodus aufweist, in dem nur die zweiten Daten dargestellt werden.

13. Radarvorrichtung nach einem der vorhergehenden Ansprüche, bei welchem das Sichtgerät (25) im Portrait-Modus angesteuert wird.

14. Radarvorrichtung nach einem der vorhergehenden Ansprüche, bei welcher das Sichtgerät (25) ein 16:10-Format aufweist und bevorzugt als Monitor ausgebildet ist.

15. Schiff (10) mit einer Radarvorrichtung (16, 18) nach einem der vorhergehenden Ansprüche, welches bevorzugt mindestens zwei Radargeräte (12, 14) aufweist.
